# EUROPÄISCHE PATENTSCHRIFT

(11) **EP 4 483 053 B1**
(45) Veröffentlichungstag und Bekanntmachung des Hinweises auf die Patenterteilung: **04.03.2026**
(21) Anmeldenummer: 23702382.5
(22) Anmeldetag: 22.01.2023
(51) Int. Cl.: F03D 3/02, F03D 3/04

(54) **WINDENERGIEANLAGE MIT VERTIKAL ANGEORDNETEM ROTOR**
WIND TURBINE WITH VERTICALLY ARRANGED ROTOR
ÉOLIENNE AVEC ROTOR AGENCÉ VERTICALEMENT

(30) Priorität: 26.02.2022 DE 202022000502 U
(43) Veröffentlichungstag der Anmeldung: 01.01.2025
(73) Patentinhaber: G4a GmbH, 88430 Rot an der Rot (DE)
(72) Erfinder: TRÄNKL, Georg, 86495 Eurasburg (DE)
(74) Vertreter: RavensPAT Patentanwälte Partnerschaft mbB
(86) Internationale Anmeldenummer: PCT/EP2023/000005
(87) Internationale Veröffentlichungsnummer: WO 2023/160869

(56) Entgegenhaltungen:
- CN-B- 104 421 103
- DE-U1- 8 600 597
- GB-A- 2 168 763
- US-A1- 2010 034 636

## Beschreibung

Die vorliegende Erfindung betrifft das Gebiet der Windenergieanlagen, die überwiegend zur Erzeugung von elektrischer Energie eingesetzt werden.

Derzeit werden zur Erzeugung von elektrischer Energie fast ausschließlich Windräder eingesetzt, die meist drei Rotorblätter besitzen, die an einer Nabe befestigt sind, die auf einer horizontalen Welle befestigt ist. Diese horizontale Welle treibt einen Generator an, der Strom liefert, sobald die Antriebswelle eine gewisse Drehzahl erreicht. Diese Windenergieanlagen benötigen eine möglichst konstante Luftströmung mit relativ hoher Geschwindigkeit. Daher eignen sich diese Anlagen am besten Offshore oder auf weiten Flächen. Diese beschriebenen Anlagen werden inzwischen mit Nabenhöhen von bis zu 200 m und mehr errichtet, um die konstanten Höhenwinde bestmöglich zu nutzen. Bei kleineren Windenergieanlagen werden oft auch vertikale Antriebswellen verbaut, an denen auf unterschiedlichste Arten Vorrichtungen zur Abnahme des Winddruckes bzw. der Luftströmung verbaut sind, wie etwa, um nur einige Beispiele zu nennen, helixartig gewundene Rotorblätter oder senkrecht stehende, beispielsweise von oben gesehen C-förmige Schaufeln.

Eine derartige C-förmig gebogene Schaufel bzw. derartige C-förmig gebogene Schaufeln verfolgt bzw. verfolgen mit ihren unterschiedlichen Formen alle das Ziel, auf der einen Seite der vertikalen Welle die Luftströmung so effektiv als möglich aufzunehmen und auf der anderen, der Luftströmung gegenläufigen Seite so wenig wie möglich Widerstand zu bieten. Da diese rotierenden Windräder immer wieder ganzheitlich der Luftströmung ausgesetzt sind, resultiert die Leistung zwangsläufig aus dem Unterschied der Kräfte, die sich aus der optimalen Ausnutzung des Winddruckes auf der ablaufenden Seite und der möglichst geringen Bremswirkung durch Strömungsoptimierung auf der anlaufenden Seite der vertikalen Welle ergeben.

Das Dokument US 2010/034636 A1 offenbart eine vertikale Windkraftanlage mit einer Schwungscheibe.

Der Erfindung liegt die Aufgabe zugrunde, eine aus dem Stand der Technik bekannte Windenergieanlage, welche einen sich während des Betriebs der Windenergieanlage um eine vertikale Achse drehenden Rotor aufweist, derart weiterzuentwickeln, dass die Effizienz dieser Windenergieanlage verbessert wird.

Erfindungsgemäß wird diese Aufgabe gelöst durch eine Windenergieanlage nach Anspruch 1.

Vorteilhafte und bevorzugte Ausführungsformen bzw. Weiterbildungen der erfindungsgemäßen Windenergieanlage nach Anspruch 1 sind Gegenstand der Ansprüche 2-10.

Vorteilhafte und bevorzugte Ausführungsbeispiele erfindungsgemäßer Windenergieanlagen werden nachfolgend beschrieben, wobei gleichzeitig im Zusammenhang mit dem nachfolgenden Text auch die anhängenden Figuren zu betrachten sind. Die Bedeutung der in den Figuren verwendeten Bezugszeichen ist der Bezugszeichenliste entnehmbar, welche sich ganz am Ende der vorliegenden Beschreibung findet. Es zeigt
- Fig. 1: eine Seitenansicht eines Ausführungsbeispiels einer erfindungsgemäßen Windenergieanlage mit Schwungscheibe, aber ohne Abdeckung,
- Fig. 2: einen Querschnitt durch ein Ausführungsbeispiel einer erfindungsgemäßen Windenergieanlage mit Abdeckung von oben gesehen im Bereich eines ersten und eines zweiten Rotors, wobei hier die Abdeckung in eingefahrenem Zustand als doppelwandige Abdeckung zu sehen ist und nur die Seite abdeckt, auf welcher der erste Rotor gegen den Wind läuft,
- Fig. 3: den Querschnitt von Fig. 2, wobei hier die Abdeckung in ausgefahrenem Zustand zu sehen ist, in welchem sie den ersten Rotor im wesentlichen vollständig von allen Seiten umschließt,
- Fig. 4a: eine Draufsicht von oben gesehen auf die Schwungscheibe des Ausführungsbeispiels der erfindungsgemäßen Windenergieanlage von Fig. 1 und
- Fig. 4b: einen Querschnitt von der Seite gesehen durch die Schwungscheibe von Fig. 4a.

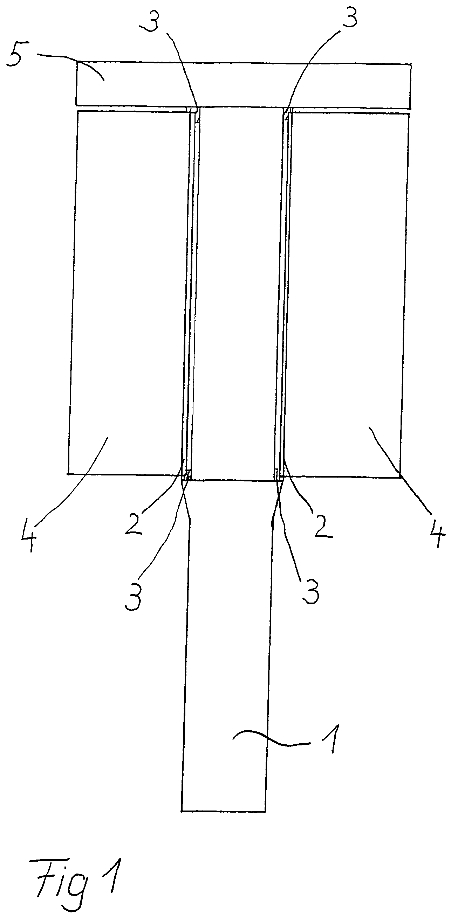

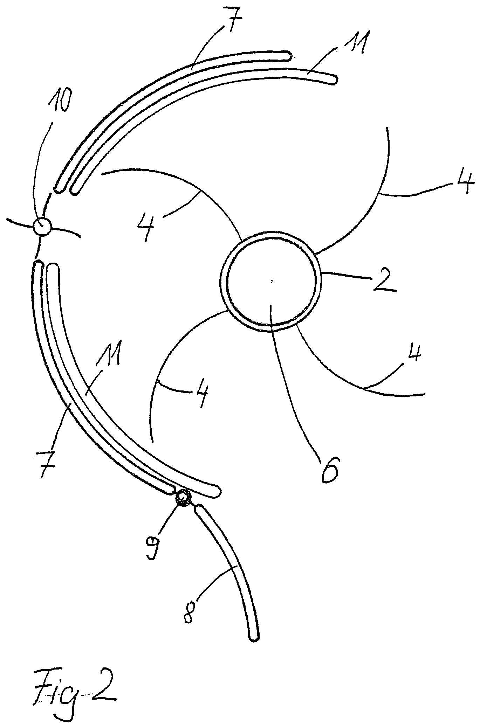

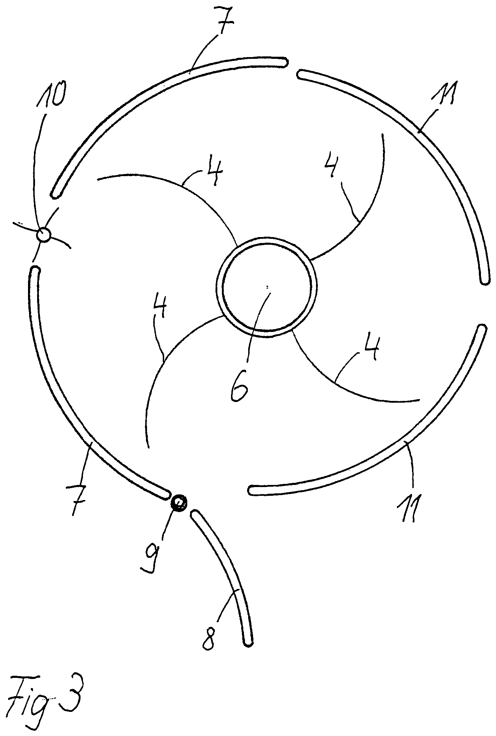

In jedem Falle handelt es sich jeweils um eine Windenergieanlage mit einem sich während des Betriebs der Windenergieanlage um eine vertikale Achse drehenden ersten Rotor. Dieser ist in den Fig. 2 und 3 als der zentral angeordnete große Rotor mit den Rotorblättern 4 zu sehen. Zu jenem ersten Rotor gehört ferner die in Fig. 1 zu sehende Hülse 2, auf die weiter unten noch genauer eingegangen wird.

Bei einer vorteilhaften Ausführung ist vorgesehen, dass die gegenläufige Seite der Windenergieanlage, d.h. die Seite der Windenergieanlage, auf welcher der erste Rotor 2, 4 gegen den Wind läuft, zumindest im Bereich des genannten ersten Rotors 2, 4 ganz oder teilweise mittels einer Abdeckung 7, 11 abgedeckt ist (vgl. diesbezüglich Fig. 2 und 3). Bevorzugt sind dabei solche Ausführungsbeispiele, bei denen ein Ruder 8 vorgesehen ist, welches die Abdeckung 7, 11 in den Wind hält. Ganz besonders bevorzugt ist es, das genannte Ruder 8 beweglich verstellbar zu lagern und derart auszuführen, dass es, beispielsweise bei Sturmböen, als Schutzeinrichtung über oder um den ersten Rotor 2, 4 geklappt werden kann. Bevorzugt sind ferner solche Ausführungsbeispiele, bei denen, so wie in Fig. 2 und 3 gezeigt, in der genannten Abdeckung 7, 11 mindestens ein zweiter Rotor 10 integriert ist. Dieser zweite Rotor 10 kann beispielsweise so ausgeführt sein, dass er sich während des Betriebs der Windenergieanlage um eine vertikale Achse dreht. Ein solches Ausführungsbeispiel ist in den Fig. 2 und 3 zu sehen. Dabei ist es ganz besonders bevorzugt, den zweiten Rotor 10 kleiner als den ersten Rotor 2, 4 auszuführen bzw. alle zweiten Rotoren kleiner als den ersten Rotor 2, 4 auszuführen. Bevorzugt sind ferner solche Ausführungsbeispiele, bei denen die genannte Abdeckung 7, 11 durch eine hydraulische und/oder pneumatische und/oder mechanische Einrichtung vor ruckartigem Pendeln, welches durch Windböen oder Schlagwinde verursacht werden könnte, geschützt bzw. gedämpft ist. Besonders bevorzugt sind ferner solche Ausführungsbeispiele, bei denen die genannte Abdeckung 7, 11 zum Teil doppelwandig ausgeführt ist und, etwa bei Sturm oder Orkan, um den ersten Rotor 2, 4 geschoben werden kann derart, dass die Abdeckung 7, 11 dann den ersten Rotor 2, 4 ganz oder teilweise umschließt. Der Übergang von dem in Fig. 2 dargestellten Zustand des dort gezeigten Ausführungsbeispiels einer erfindungsgemäßen Windenergieanlage zu ihrem in Fig. 3 dargestellten Zustand verdeutlicht dies in anschaulicher Weise.

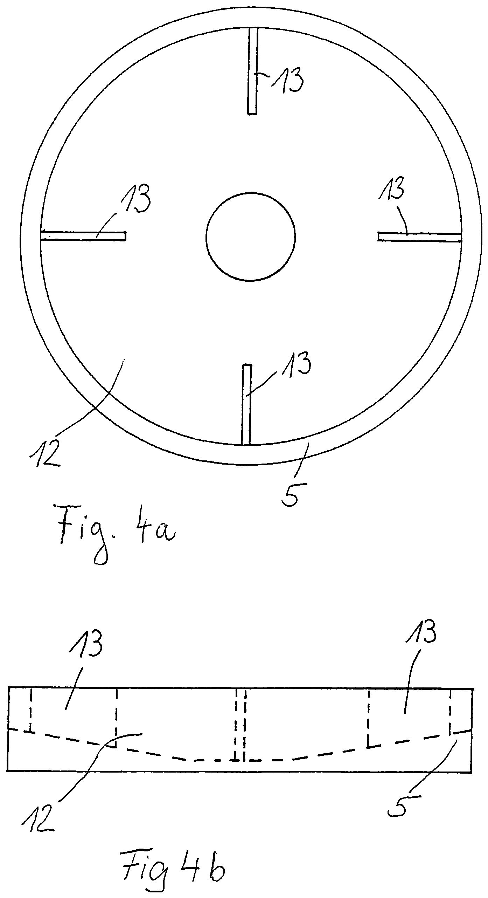

Gemäß Anspruch 1 besteht das Wesen der Erfindung darin, dass an dem ersten Rotor 2, 4 eine trichterförmige Schwungscheibe 5 verbaut ist, die zum Teil mit Flüssigkeit gefüllt ist, wobei die Flüssigkeit im Ruhezustand des ersten Rotors 2, 4 in der trichterförmigen Vertiefung in der Mitte der trichterförmigen Schwungscheibe 5 gesammelt ist und bei Drehung des ersten Rotors 2, 4 durch die aufgrund der Rotation auftretende Fliehkraft nach außen in eine Kammer oder in mehrere Kammern gepresst wird (vgl. diesbezüglich Fig. 1, 4a und 4b).

Bei einer vorteilhaften Ausführung ist vorgesehen, dass der erste Rotor 2, 4 Schaufeln 4 mit C-förmigem Querschnitt aufweist und ferner zusätzliche, schräg stehende, an der Unterseite der von oben betrachteten C-förmigen Schaufeln 4 montierte Flügel vorhanden sind, welche dazu dienen, zusätzlich von unten aufsteigende Luftströmungen zu nutzen, um eine Drehbewegung des ersten Rotors 2, 4 zu erzeugen.

Ganz generell gilt, dass besonders bevorzugt solche Weiterbildungen erfindungsgemäßer Windenergieanlagen sind, bei denen der erste Rotor 2, 4 durch eine hydraulische und/oder pneumatische und/oder mechanische Einrichtung vor ruckartigen Drehbewegungen, welche durch Windböen oder Schlagwinde verursacht werden könnten, geschützt bzw. gedämpft ist

Die die oben genannte Abdeckung 7, 11, bewirkt, dass an einer vertikalen Windenergieanlage mit senkrecht stehenden Schaufeln oder auch helixartig angeordneten Schaufeln oder Rotorblättern 4 oder jeder anderen Art von sich um eine vertikale Achse drehenden Vorrichtungen die gegenteilig wirkende, also bremsende, Kraft an der anlaufenden Seite minimiert oder gänzlich aufgehoben wird. Dazu wird über eine zentrale vertikale Welle 6 eine Hülse 2 geschoben, an der z.B. von oben betrachtet C-förmige Schaufeln 4 montiert sind. Es müssen mindestens zwei Schaufeln 4 oder mehrere Schaufeln 4 sein, um einen möglichst gleichmäßigen runden Lauf der Windenergieanlage ohne Unwucht zu gewährleisten. Die beschriebene Hülse 2 ist so leicht laufend wie möglich zu lagern. Die Anzahl und der jeweilige Ort der Lagerstellen 3 der genannten Hülse 2 an der zentralen vertikalen Welle 6 (siehe Fig. 1) ergeben sich aus der Höhe, dem Durchmesser, dem Gewicht und vor allem der angestrebten Drehgeschwindigkeit der Windenergieanlage.

Die zentrale vertikale Welle 6 sollte so weit aus dem Fundament 1 ragen, dass die Hülse 2 mit den Schaufeln oder Rotorblättern 4 ein Stück unterhalb der zentralen vertikalen Welle 6 endet.

Nun kann ein der Länge nach halbiertes Rohr unterhalb der aufgeschobenen Hülse 2 und oberhalb der aufgeschobenen Hülse 2 drehbar an der herausragenden zentralen vertikalen Welle 6 befestigt werden. Dieses der Länge nach halbierte Rohr wird im weiteren Textverlauf als "Abdeckung" bezeichnet. Es ist auf der windabgewandten Seite mit einer ruderartigen Verlängerung 8 versehen.

Damit wird gewährleistet, dass die Abdeckung 7, 11 im gewünschten Winkel zur Windrichtung steht und somit die anlaufende Seite der Schaufeln oder Rotorblätter 4 zur Gänze abgedeckt ist und somit keinerlei Bremswirkung verursacht wird. Ganz im Gegenteil lässt bzw. lassen sich in die Abdeckung 7, 11 je nach Durchmesser ein senkrecht stehender Rotor 10 oder mehrere senkrecht stehende Rotoren integrieren, der bzw. die durch die abgeleitete Strömung mittels der Abdeckung 7, 11 auch noch Energie erzeugen und außerdem auftretenden Vibrationen entgegenwirken kann bzw. können. Auch wird durch diese Anordnung in Verbindung mit einer gezackten oder ausgefransten Abrisskante an den montierten Schaufeln oder Rotorblättern 4 die akustische Belastung der Umwelt auf ein Minimum reduziert. Ebenso ist zu beachten, dass die Montage von schräg stehenden Flügeln an der Unterseite der von oben betrachteten C-förmigen Schaufel 4, ob senkrecht oder helixartig montiert, aufsteigende Luftströmung z.B. bei Montage der entsprechenden Windenergieanlage auf einem Kamin nutzen lässt.

Bei aufkommendem Sturm oder bei aufkommenden Sturmböen kann über eine auch in Form eines in Längsrichtung geteilten Rohres gestaltete ausfahrbare Abdeckung 7, 11 ein Großteil des Rotors 2, 4 abgedeckt werden. Gesteuert wird die Abdeckung 7, 11 über eine Drehbewegung des Rotors 2, 4 entweder elektrisch, hydraulisch, pneumatisch oder aus einer Verbindung dieser Antriebsarten. Desgleichen muss auf diese Art parallel zum Abdecken und/oder Bremsen des Rotors 2, 4 das Ruder 8 aus dem Wind genommen werden und so gestellt werden, dass der freie Teil des Rotors 2, 4 komplett aus dem Wind gedreht wird. Um das Pendeln und ruckartige Drehen der Rotorabdeckung 7, 11 zu unterbinden, ist an geeigneter Stelle, je nach Größe der Windenergieanlage, eine mechanisch-hydraulische Bremse oder ein Drehmomentwandler oder ein Ölmotor bzw. Ölventil mit gedrosseltem Durchgang zu verbauen. Diese Mechaniken sind geeignet, um eine langsame kontrollierte Bewegung zuzulassen und gleichermaßen ein ruckartiges Pendeln oder Schlagen zu verhindern.

Um einen möglichst sicheren und stabilen Stand zu gewährleisten, sollte in Ruheposition möglichst viel Masse um die zentrale vertikale Welle 6 gebündelt sein. Zum sicheren gleichmäßigen Betrieb soll aber beim Betrieb der Anlage möglichst viel Masse als Schwungmasse weit außerhalb der zentralen vertikalen Welle 6 gelagert sein.

Dies wird erreicht, indem am oberen Ende der Hülse 2, die über die zentrale vertikale Welle 6 geschoben und drehbar gelagert wird und an der die Schaufeln oder Rotorblätter 4 befestigt sind, ein in der Mitte trichterförmiger scheibenähnlicher Behälter 12 befestigt ist, an dessen äußerem Rand beliebig viele Stege 13 von außen zur Mitte hin angebracht sind. Dieser Behälter 12 wird zum Teil mit einer Flüssigkeit gefüllt, die während des Stillstandes der Anlage in der trichterförmigen Vertiefung in der Mitte des Behälters 12 ruht und während der Drehbewegung nach außen in die angebrachten Kammern zentrifugiert wird und dort als Schwungmasse wirkt.

Die Anzahl der eingebauten Stege 13 und die Konsistenz der Flüssigkeit hängen von Umweltbedingungen bzw. der Temperatur und den Windgegebenheiten ab.

### Bezugszeichenliste

- 1: Sockel
- 2: Hülse / Aufnahme Rotorblätter
- 3: Lagerstellen
- 4: Rotorblätter
- 5: Schwungscheibe
- 6: zentrale vertikale Welle
- 7: Abdeckung der anlaufenden Rotorblätter
- 8: Ruderblatt verstellbar
- 9: Scharnier für Ruderblatt
- 10: senkrecht stehender Rotor in der Abdeckung integriert
- 11: ausfahrbare Abdeckung
- 12: Schwungmassenbehälter
- 13: Stege

## Patentansprüche

1. Windenergieanlage mit einem sich während des Betriebs der Windenergieanlage um eine vertikale Achse drehenden ersten Rotor (2, 4), wobei an dem ersten Rotor (2, 4) eine trichterförmige Schwungscheibe (5) verbaut ist, **dadurch gekennzeichnet, dass** die trichterförmige Schwungscheibe (5) zum Teil mit Flüssigkeit gefüllt ist, wobei die Flüssigkeit im Ruhezustand des ersten Rotors (2, 4) in der trichterförmigen Vertiefung in der Mitte der trichterförmigen Schwungscheibe (5) gesammelt ist und bei Drehung des ersten Rotors (2, 4) durch die aufgrund der Rotation auftretende Fliehkraft nach außen in eine Kammer oder in mehrere Kammern gepresst wird.

2. Windenergieanlage nach dem Anspruch 1, **dadurch gekennzeichnet, dass** der erste Rotor (2, 4) Schaufeln (4) mit C-förmigem Querschnitt aufweist und ferner zusätzliche, schräg stehende, an der Unterseite der von oben betrachteten C-formigen Schaufeln (4) montierte Flügel vorhanden sind, welche dazu dienen, zusätzlich von unten aufsteigende Luftströmungen zu nutzen, um eine Drehbewegung des ersten Rotors (2, 4) zu erzeugen.

3. Windenergieanlage nach dem Anspruch 1, **dadurch gekennzeichnet, dass** die gegenläufige Seite der Windenergieanlage, d.h. die Seite der Windenergieanlage, auf welcher der erste Rotor (2, 4) gegen den Wind läuft, zumindest im Bereich des genannten ersten Rotors (2, 4) ganz oder teilweise mittels einer Abdeckung (7, 11) abgedeckt ist.

4. Windenergieanlage nach dem vorhergehenden Anspruch 3, **gekennzeichnet durch** ein Ruder (8), das die Abdeckung (7, 11) in den Wind hält.

5. Windenergieanlage nach Anspruch 4, **dadurch gekennzeichnet, dass** das genannte Ruder (8) beweglich verstellbar gelagert ist und, beispielsweise bei Sturmböen, als Schutzeinrichtung über oder um den ersten Rotor (2, 4) geklappt werden kann.

6. Windenergieanlage nach einem der Ansprüche 3 bis 5, **dadurch gekennzeichnet, dass** in der genannten Abdeckung (7, 11) mindestens ein zweiter Rotor (10) integriert ist.

7. Windenergieanlage nach Anspruch 6, **dadurch gekennzeichnet, dass** der zweite Rotor (10) kleiner als der erste Rotor (2, 4) ist oder dass alle zweiten Rotoren kleiner als der erste Rotor (2, 4) sind.

8. Windenergieanlage nach einem der Ansprüche 3 bis 7, **dadurch gekennzeichnet, dass** die Abdeckung (7, 1 1 ) durch eine hydraulische und/oder pneumatische und/oder mechanische Einrichtung vor ruckartigem Pendeln, welches durch Windböen oder Schlagwinde verursacht werden könnte, geschützt bzw. gedämpft ist.

9. Windenergieanlage nach einem der Ansprüche 3 bis 8, **dadurch gekennzeichnet, dass** die Abdeckung (7, 11) zum Teil doppelwandig ausgeführt ist und, etwa bei Sturm oder Orkan, um den ersten Rotor (2, 4) geschoben werden kann derart, dass die Abdeckung (7, 1 1) dann den ersten Rotor (2, 4) ganz oder teilweise umschließt.

10. Windenergieanlage nach einem der vorhergehenden Ansprüche, **dadurch gekennzeichnet, dass** der erste Rotor (2, 4) durch eine hydraulische und/oder pneumatische und/oder mechanische Einrichtung vor ruckartigen Drehbewegungen, welche durch Windböen oder Schlagwinde verursacht werden könnten, geschützt bzw. gedämpft ist.

## Claims

1. Wind turbine having a first rotor (2, 4) that rotates abut a vertical axis during operation of the wind turbine, wherein a funnel-shaped flywheel (5) is installed on the first rotor (2, 4), **characterized in that** the funnel-shaped flywheel (5) is partially filled with liquid, wherein the liquid is in a state collected in the funnel-shaped recess in the middle of the funnel-shaped flywheel (5) in the rest state of the first rotor (2, 4) and is pressed outwards into one chamber or into a plurality of chambers as a result of the centrifugal force that arises on account of the rotation when the first rotor (2, 4) is rotated.

2. Wind turbine according to Claim 1, **characterized in that** the first rotor (2, 4) has vanes (4) with a C-shaped cross section, and there are also additional, inclined fins mounted on the underside of the vanes (4) that are C-shaped when viewed from above, said blades serving to additionally use air flows that rise up from below in order to generate a rotational movement of the first rotor (2, 4).

3. Wind turbine according to Claim 1, **characterized in that** the opposite side of the wind turbine, i.e. the side of the wind turbine on which the first rotor (2, 4) runs counter to the wind, is partially or entirely covered by means of a cover (7, 11) at least in the region of said first rotor (2, 4).

4. Wind turbine according to the preceding Claim 3, **characterized by** a rudder (8) that keeps the cover (7, 11) facing into the wind.

5. Wind turbine according to Claim 4, **characterized in that** said rudder (8) is mounted in a movably adjustable manner and, for example in the event of squalls, can be folded as a protective device over or around the first rotor (2, 4).

6. Wind turbine according to any of Claims 3 to 5, **characterized in that** at least one second rotor (10) is integrated into said cover (7, 11).

7. Wind turbine according to Claim 6, **characterized in that** the second rotor (10) is smaller than the first rotor (2, 4), or **in that** all the second rotors are smaller than the first rotor (2, 4).

8. Wind turbine according to any of Claims 3 to 7, **characterized in that** the cover (7, 11) is protected or damped by a hydraulic and/or pneumatic and/or mechanical device against abrupt swinging which could be caused by squalls or gusts of wind.

9. Wind turbine according to any of Claims 3 to 8, **characterized in that** the cover (7, 11) is embodied partially in a double-walled manner and, for instance in a storm or windstorm, can be pushed around the first rotor (2, 4) such that the cover (7, 11) then partially or entirely encloses the first rotor (2, 4).

10. Wind turbine according to any of the preceding claims, **characterized in that** the first rotor (2, 4) is protected or damped by a hydraulic and/or pneumatic and/or mechanical device against abrupt rotational movements which could be caused by squalls or gusts of wind.

## Revendications

1. Eolienne avec un premier rotor (2, 4) tournant autour d'un axe vertical pendant le fonctionnement de l'éolienne, un disque volant (5) en forme d'entonnoir étant monté sur le premier rotor (2, 4), **caractérisée en ce que** le disque volant (5) en forme d'entonnoir est en partie rempli de liquide, le liquide étant collecté dans le renfoncement en forme d'entonnoir au centre du disque volant (5) en forme d'entonnoir dans l'état de repos du premier rotor (2, 4) et étant pressé vers l'extérieur dans une chambre ou dans plusieurs chambres par la force centrifuge apparaissant du fait de la rotation lors de la rotation du premier rotor (2, 4).

2. Eolienne selon la revendication 1, **caractérisée en ce que** le premier rotor (2, 4) comporte des pales (4) avec une section transversale en forme de C et des ailettes supplémentaires situées de manière oblique, montées sur le côté inférieur des pales (4) en forme de C vues depuis le bas sont en outre présentes, lesquelles servent à utiliser en supplément des écoulements d'air ascendants depuis le bas pour produire un mouvement de rotation du premier rotor (2, 4).

3. Eolienne selon la revendication 1, **caractérisée en ce que** le côté contrarotatif de l'éolienne, en d'autres termes le côté de l'éolienne sur lequel le premier rotor (2, 4) tourne contre le vent, est recouvert en totalité ou en partie au moyen d'un couvercle (7, 11) au moins dans la zone dudit premier rotor (2, 4).

4. Eolienne selon la revendication précédente 3, **caractérisée par** un gouvernail (8) qui maintient le couvercle (7, 11) dans le sens du vent.

5. Eolienne selon la revendication 4, **caractérisée en ce que** ledit gouvernail (8) est monté de manière à pouvoir être ajusté en mouvement et peut, par exemple en cas de rafales de vent, être rabattu en tant que dispositif de protection par-dessus ou autour du premier rotor (2, 4).

6. Eolienne selon l'une des revendications 3 à 5, **caractérisée en ce qu'**au moins un deuxième rotor (10) est intégré dans ledit couvercle (7, 11).

7. Eolienne selon la revendication 6, **caractérisée en ce que** le deuxième rotor (10) est inférieur au premier rotor (2, 4) ou que la totalité des deuxièmes rotors sont inférieurs au premier rotor (2, 4).

8. Eolienne selon l'une des revendications 3 à 7, **caractérisée en ce que** le couvercle (7, 11) est protégé ou amorti par un dispositif hydraulique et/ou pneumatique et/ou mécanique contre des oscillations par à-coups, qui pourraient être provoquées par des coups de vent ou par des vents violents.

9. Eolienne selon l'une des revendications 3 à 8, **caractérisée en ce que** le couvercle (7, 11) est réalisé en partie à paroi double et peut être glissé par exemple en cas de tempête ou d'ouragan, autour du premier rotor (2, 4) de telle manière que le couvercle (7, 11) entoure alors en totalité ou en partie le premier rotor (2, 4).

10. Eolienne selon l'une des revendications précédentes, **caractérisée en ce que** le premier rotor (2, 4) est protégé ou amorti par un dispositif hydraulique et/ou pneumatique et/ou mécanique contre des mouvements rotatifs par à-coups, qui pourraient être provoqués par des coups de vent ou par des vents violents.
